# FASCICULE DE BREVET EUROPEEN

(11) **EP 3 043 041 B1**
(45) Date de publication et mention de la délivrance du brevet: **19.07.2017**
(21) Numéro de dépôt: 15198465.5
(22) Date de dépôt: 08.12.2015
(51) Int. Cl.: F01N 3/20

(54) **PROCÉDÉ DE TRAITEMENT DES OXYDES D'AZOTE ISSUS D'UN MOTEUR À COMBUSTION INTERNE**
BEHANDLUNGSVERFAHREN VON AUS EINER BRENNKRAFTMASCHINE AUSGESTOSSENEN STICKOXIDEN
METHOD FOR TREATING NITROGEN OXIDES EMITTED FROM AN INTERNAL COMBUSTION ENGINE

(30) Priorité: 07.01.2015 FR 1550096
(43) Date de publication de la demande: 13.07.2016
(73) Titulaire: Peugeot Citroën Automobiles SA, 78140 Vélizy-Villacoublay (FR)
(72) Inventeur: BERNARD, YOAN, 78570 Andresy (FR); CLAVEL, GUILLAUME, 92000 Nanterre (FR); ZUMI, MICHEL, 92600 Asnières-sur-Seine (FR)

(56) Documents cités:
- EP-A1- 2 525 059
- WO-A2-2007/120126
- DE-A1-102008 056 860
- FR-A1- 2 933 736
- US-A1- 2011 036 078

## Description

L'invention a trait au domaine de la dépollution des gaz rejetés par les moteurs diesel.

Les gaz d'échappement des moteurs diesel contiennent des éléments polluants dont il est préférable de limiter les rejets dans l'atmosphère. Ces éléments polluants proviennent de la combustion du carburant diesel et comprennent des oxydes d'azote (couramment désignés sous l'acronyme NOx), du monoxyde de carbone (CO), du carburant imbrûlé ou encore des particules de suie.

Une fois la combustion terminée, les gaz d'échappement quittent le moteur et sont canalisés vers une ligne d'échappement, les gaz subissant plusieurs traitements par catalyse et filtration afin qu'en soient au moins partiellement extraits certains éléments nocifs.

L'élimination des NOx des gaz d'échappement peut être effectuée par différentes méthodes. L'une des méthodes consiste à renvoyer une partie des gaz d'échappement vers le moteur, cette technique appelée EGR pour Exhaust Gas Recyclation permet de réduire la température de combustion qui est un paramètre d'ordre 1 dans la formation des NOx. D'autres dispositifs piègent les NOx par adsorption, ces pièges étant connus sous l'acronyme anglais LNT pour Lean NOx Trap. II existe également des systèmes plus élaborés comme la réduction catalytique sélective qui consiste à injecter une solution réductrice des NOx, l'injection étant pilotée de manière dynamique afin de tenir compte des proportions stoechiométriques définies par les réactions suivantes :

4NH₃ + 4NO + O₂ → 4N₂ + 6H₂O

2NH₃ + NO + NO₂ → 2N₂ + 3H₂O

4NH₃ + 2NO₂ + O₂ → 3N₂ + 6H₂O

L'utilisation d'un système de réduction catalytique sélective implique que le véhicule soit équipé de moyens lui permettant de déterminer la quantité de NOx produite lors de la combustion, et ceci de manière instantanée.

Le document FR 2 933 736 propose un procédé de dépollution dont l'une des étapes consiste à comparer la quantité de NOx produite dans le moteur avec une consigne. Dans l'hypothèse où la quantité de NOx produite est supérieure à la consigne, le procédé démarre une étape de dépollution consistant à utiliser à la fois le dispositif de dépollution se présentant sous la forme d'un catalyseur et à agir sur divers paramètres de la combustion. La quantité de NOx produite est calculée à l'aide d'un modèle mathématique dans lequel il est nécessaire de connaître la température du mélange de combustion. Cette température est déterminée à partir de plusieurs variables, à savoir les débits des gaz d'échappement, de carburant, d'air (admission) et les températures des gaz d'échappement, de carburant, et d'air. La consigne est, quant à elle, établie de manière empirique.

Cette méthode présente des carences. Lorsque le véhicule est utilisé dans des conditions où la température extérieure est basse voire très basse, le niveau de NOx émis par le moteur est largement supérieur à celui d'une utilisation par température ambiante. La dépollution nécessite, pour traiter la totalité des NOx produits, que de grands débits d'un agent réducteur soient injectés. Ces débits sont parfois même au-dessus des limites du dispositif de dépollution réduisant, ainsi, sa durée de vie.

Un objet de l'invention est un procédé de dépollution qui permette de dépolluer correctement les gaz d'échappement, tout en assurant une grande durée de vie du dispositif de dépollution.

A cet effet, il est proposé en premier lieu, un procédé de dépollution des gaz d'échappement issus d'un moteur à combustion interne comprenant une ligne d'échappement, ce procédé de dépollution étant au moins partiellement mis en oeuvre dans un catalyseur disposé dans la ligne d'échappement, ce procédé comprenant les étapes de :
- détermination d'une quantité d'oxydes d'azote réellement produite par le moteur pour un point de fonctionnement moteur donné,
- détermination d'une consigne de quantité d'oxydes d'azote dans les gaz d'échappement au point de fonctionnement moteur donné à ne pas dépasser en sortie de la ligne d'échappement,
- comparaison de la quantité d'oxydes d'azote réellement produite par le moteur au point de fonctionnement moteur donné avec cette consigne de quantité d'oxydes d'azote à ne pas dépasser, et si la quantité d'oxydes d'azote réellement produite par le moteur est supérieure à cette consigne de quantité d'oxydes d'azote à ne pas dépasser, traitement des oxydes d'azote, tant que la quantité d'oxydes d'azote réellement produite est supérieure à la consigne de quantité d'oxydes d'azote à ne pas dépasser à la sortie de la ligne d'échappement, caractérisé en ce que la consigne de quantité d'oxydes d'azote dans les gaz d'échappement à ne pas dépasser à la sortie de la ligne d'échappement est déterminée en fonction de la température extérieure.

Diverses caractéristiques supplémentaires peuvent être prévues, seules ou en combinaison :
- l'étape de comparaison comprend la détermination de l'écart entre la quantité d'oxydes d'azote réellement produite par le moteur au point de fonctionnement moteur donné et la consigne de quantité d'oxydes d'azote à ne pas dépasser.
- l'étape de traitement des oxydes d'azote comprend le calcul d'une quantité d'un agent réducteur des oxydes d'azote requise pour traiter cet écart et l'injection de cet agent réducteur dans la ligne d'échappement.
- la quantité d'un agent réducteur des oxydes d'azote requise pour traiter cet écart est compatible avec les limites physiques et contraintes de durabilité des composants.
- la température extérieure est mesurée de manière continue grâce à un capteur de température.
- la détermination de la quantité d'oxydes d'azote réellement produite par le moteur se fait par mesure grâce à une sonde positionnée en aval du moteur et en amont du catalyseur.
- la détermination de la consigne de quantité d'oxydes d'azote dans les gaz d'échappement à ne pas dépasser en sortie de la ligne d'échappement se fait à l'aide d'une fonction de transfert dont l'entrée est la température extérieure et la sortie est consigne de quantité d'oxydes d'azote dans les gaz d'échappement à ne pas dépasser à la sortie de la ligne d'échappement.

Il est proposé, en deuxième lieu, un système de dépollution, caractérisé en ce que celui-ci comprend :
- un réducteur catalytique sélectif ou SCR,
- un réservoir d'un agent réducteur des oxydes d'azote,
- un circuit d'injection muni d'une pompe et d'un injecteur en amont du SCR,
- un calculateur comprenant un processeur et un support mémoire dans lequel est implémenté un programme informatique mettant en oeuvre le procédé de dépollution selon l'une quelconque des variantes précédemment décrites.

Dans une réalisation, l'agent réducteur est de l'ammoniac ou un précurseur liquide de l'ammoniac.

Il est proposé, en troisième lieu, un véhicule automobile, caractérisé en ce que celui-ci comprend un système de dépollution tel que précédemment décrit.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un véhicule automobile muni d'un système de dépollution,
- la figure 2 est une vue schématique d'un système de dépollution,
- la figure 3 est une vue schématique d'un calculateur du système de dépollution.

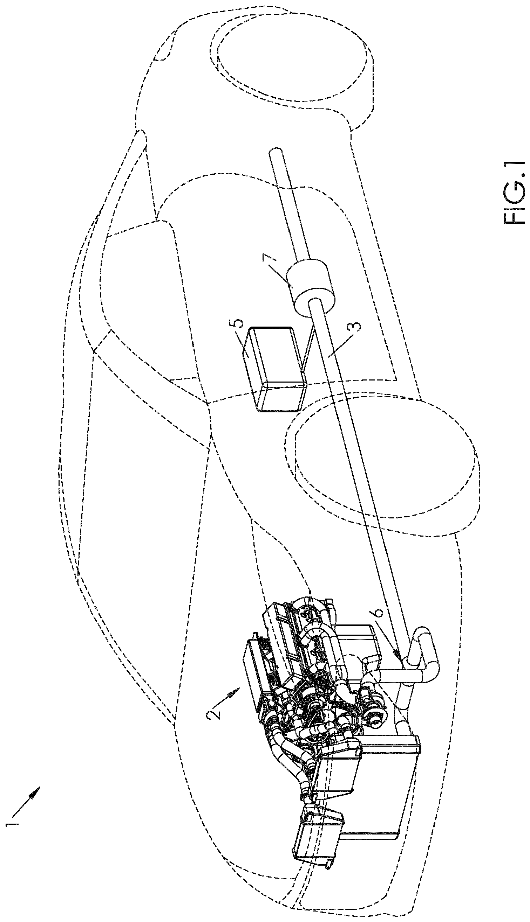

Le véhicule **1** automobile représenté en figure 1 comprend un moteur **2** à combustion interne, une ligne **3** d'échappement, un système **4** de dépollution des gaz d'échappement issus du moteur **2,** un réservoir **5** d'un agent réducteur des oxydes d'azote.

Les produits de la combustion contiennent, à la sortie des chambres de combustion du moteur **2,** des gaz, notamment des oxydes d'azote (NOx). Les gaz d'échappement sont évacués du moteur **2** par la ligne **3** d'échappement sur laquelle est monté le système **4** de dépollution pour filtrer les gaz d'échappement avant leur rejet dans l'atmosphère. La ligne **3** d'échappement débute à la sortie des chambres de combustion par un collecteur **6** d'échappement permettant de collecter les gaz des chambres de combustion pour les réunir dans un seul conduit débouchant dans l'atmosphère.

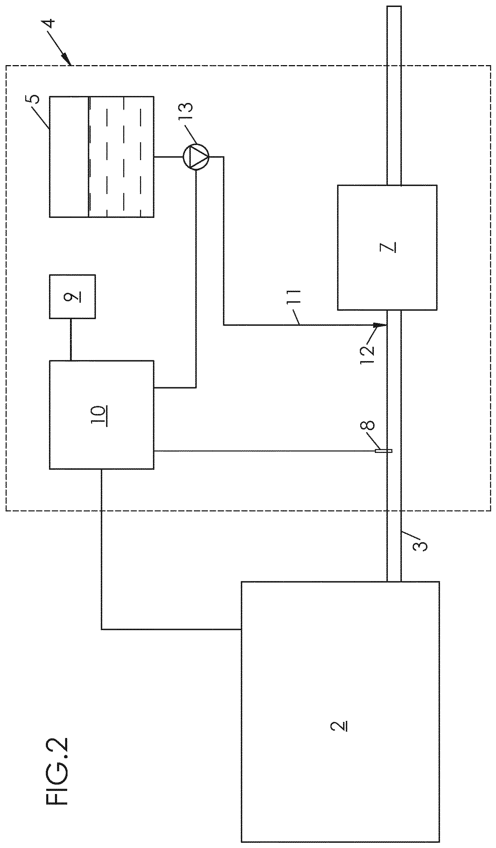

Le système **4** de dépollution, illustré de manière plus détaillée sur la figure 2, comprend :
- un catalyseur de réduction catalytique sélectif ou SCR **7** conçu pour traiter les oxydes d'azote (NOx),
- une sonde **8** montée sur le conduit en aval du moteur **2** et en amont du catalyseur **7** ayant pour fonction de mesurer le taux de NOx dans les gaz d'échappement,
- un capteur **9** de température mesurant la température de l'air extérieur entrant dans le moteur **2**.Par air extérieur on entend ici l'air extérieur au véhicule.

- un calculateur **10** auquel est connecté la sonde **8** et le capteur **9** de température, ce calculateur **10** comprenant une unité de traitement (ou processeur) programmable,
- un réservoir **5** d'un agent réducteur des oxydes d'azote raccordé, par un circuit **11** d'injection, au conduit en amont du SCR **7.** L'agent réducteur des oxydes d'azote est de préférence de l'ammoniac ou un précurseur liquide de l'ammoniac tel qu'une solution aqueuse d'urée.
- une pompe **13** d'injection disposée sur le circuit **11** d'injection et un injecteur **12** permettant de contrôler l'injection d'urée en amont du SCR **7.**

Rappelons qu'un SCR **7** est un dispositif utilisé sur les véhicules diesel pour traiter les NOx présents dans les gaz d'échappement, grâce à une réduction des NOx par l'ammoniac, lequel est issu de l'urée en solution aqueuse portée à une température élevée et ceci en présence d'oxygène pour produire de l'azote et de l'eau.

Le calculateur **10** pilote l'injection d'urée en solution aqueuse depuis le réservoir **5** grâce à la pompe **13** d'injection et à l'injecteur **12.** Le calculateur **10** est muni d'un support mémoire (non représenté) dans lequel est implémenté un programme informatique.

Le calculateur **10** opère simultanément plusieurs opérations. Le calculateur **10** détermine la quantité d'oxydes d'azote réellement produite par le moteur **2** pour un point de fonctionnement donné. Cette quantité d'oxydes d'azote réellement produite peut être modélisée ou encore mesurée. Dans le cas où cette quantité est modélisée, le calculateur **10** tient compte de l'ensemble des variables impactant la production des oxydes d'azote dans le moteur **2.**

Le moteur **2** est calibré pour répondre à un cahier des charges s'articulant autour d'un compromis entre consommation, pollution, agrément, bruit et performance. Ce compromis doit être optimisé dans toutes les situations de vie du moteur **2,** à savoir les phases de démarrage, moteur froid ou chaud, un fonctionnement en altitude, un fonctionnement dans un environnement très froid ou très chaud.

En prenant pour exemple le cas d'un environnement très froid, il n'est pas possible de garantir un optimum pour chacune des prestations énumérées ci-dessus. La priorité est alors conventionnellement donnée aux prestations visibles pour le conducteur, à savoir la performance, l'agrément et le bruit. Dans ces conditions, les émissions de NOx sont largement supérieures aux niveaux observés en condition de température tempérée (20°C).

Le calculateur **10** détermine une quantité limite d'oxydes d'azote dans les gaz d'échappement et qui doit être évacuée dans l'atmosphère. Cette quantité sera ci-après dénommée, consigne 16. La quantité réelle de NOx évacuée dans l'atmosphère ne doit pas être supérieure à celle donnée par la consigne **16.**

La consigne **16** est déterminée en fonction de la température externe. La température externe est mesurée instantanément par le capteur **9** de température. La consigne **16** est déterminée pour qu'en fonction de la température externe, sa valeur respecte avantageusement les normes d'émissions en vigueur.

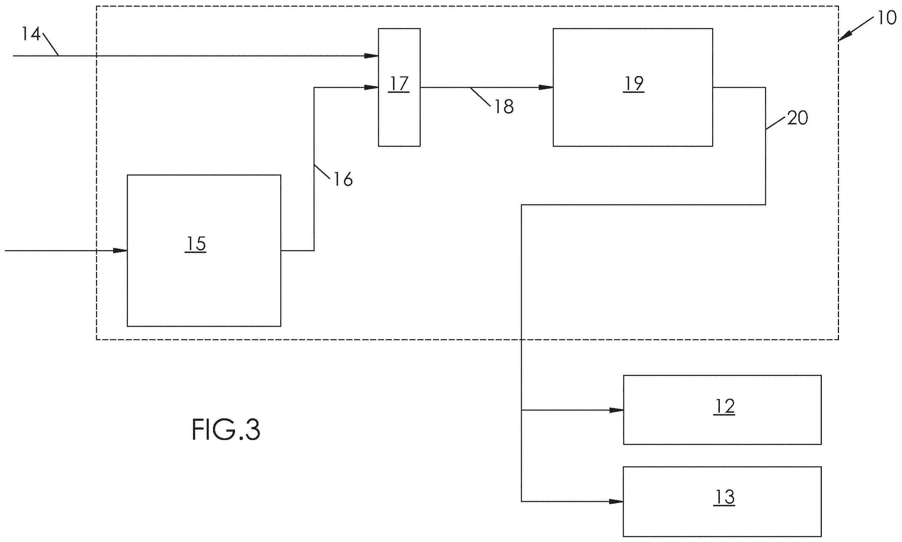

Plus précisément et en référence à la figure 3, la quantité réelle d'oxydes d'azote produite par le moteur **2** est envoyée vers le calculateur **10,** cette quantité étant ci-après dénommée information **14** NOx. Au même moment, la température mesurée est également envoyée vers le calculateur **10,** et plus particulièrement vers une fonction **15** de transfert dans le calculateur **10** qui fournit la consigne **16** avantageusement conforme aux normes en vigueur en matière d'émissions de NOx. Cette fonction de transfert peut se présenter sous la forme d'une cartographie implémentée dans le support mémoire du calculateur **10** et établissant en fonction de la température d'air extérieur la valeur de la consigne 16 de NOx à ne pas dépasser en sortie d'échappement.

L'information **14** NOx et la consigne **16** sont comparées dans un comparateur **17.** Dans l'hypothèse où l'information **14** NOx est supérieure à la consigne **16,** le comparateur **17** détermine la quantité de NOx à traiter ci-après dénommée, consigne **18** à traiter, afin que la quantité de NOx réellement émise soit égale à la consigne **16.** La consigne **18** à traiter est obtenue par la détermination de l'écart entre la quantité d'oxydes d'azote réellement produite par le moteur **2** au point de fonctionnement moteur donné et la consigne **16** de quantité d'oxydes d'azote à ne pas dépasser.

Cette consigne **18** à traiter est envoyée vers un sous-calculateur **19** qui détermine la quantité requise d'agent réducteur des oxydes d'azote à injecter pour traiter cet écart, ci-après dénommé consigne **20** d'urée. Avantageusement, est vérifié que la consigne **20** d'urée est compatible avec les limites physiques et contraintes de durabilité des composants, à savoir l'injecteur **12** et la pompe **13.**

La consigne **20** d'agent réducteur est envoyée à la fois à l'injecteur **12** et à la pompe **13** afin que ceux-ci injectent l'agent réducteur en amont du SCR **7.** Le fait que la consigne **16** soit calculée en fonction de la température extérieure permet de limiter les débits injectés pour mille kilomètres parcourus.

Un premier avantage du procédé qui vient d'être décrit est d'augmenter la longévité du système **4** de dépollution, et tout particulièrement de la pompe **13** et de l'injecteur **12.**

Un deuxième avantage est une économie significative d'agent réducteur, par exemple Adblue ®. En effet, c'est l'écart entre les NOx émis par le moteur et la valeur de consigné qui donne la quantité de NOx à dépolluer et donc la quantité d'agent réducteur à injecter.

## Revendications

1. Procédé de dépollution des gaz d'échappement issus d'un moteur (**2**) à combustion interne comprenant une ligne d'échappement (**3**), ce procédé de dépollution étant au moins partiellement mis en oeuvre dans un catalyseur (**7**) disposé dans la ligne d'échappement (**3**), ce procédé comprenant les étapes de :
- détermination d'une quantité d'oxydes d'azote réellement produite par le moteur (**2**) pour un point de fonctionnement moteur donné,
- détermination d'une consigne (**16**) de quantité d'oxydes d'azote dans les gaz d'échappement au point de fonctionnement moteur donné à ne pas dépasser en sortie de la ligne d'échappement (**3**),
- comparaison de la quantité d'oxydes d'azote réellement produite par le moteur (**2**) au point de fonctionnement moteur donné avec cette consigne (**16**) de quantité d'oxydes d'azote à ne pas dépasser, et si la quantité d'oxydes d'azote réellement produite par le moteur (**2**) est supérieure à cette consigne (**16**) de quantité d'oxydes d'azote à ne pas dépasser, traitement des oxydes d'azote, tant que la quantité d'oxydes d'azote réellement produite (**2**) est supérieure à la consigne (**16**) de quantité d'oxydes d'azote à ne pas dépasser à la sortie de la ligne d'échappement (**3**),
**caractérisé en ce que** la consigne (**16**) de quantité d'oxydes d'azote dans les gaz d'échappement à ne pas dépasser à la sortie de la ligne d'échappement (**3**) est déterminée en fonction de la température extérieure.

2. Procédé de dépollution selon la revendication 1, **caractérisé en ce que** l'étape de comparaison comprend la détermination de l'écart entre la quantité d'oxydes d'azote réellement produite par le moteur (**2**) au point de fonctionnement moteur donné et la consigne (**16**) de quantité d'oxydes d'azote à ne pas dépasser.

3. Procédé de dépollution selon la revendication 2, **caractérisé en ce que** l'étape de traitement des oxydes d'azote comprend le calcul d'une quantité d'un agent réducteur des oxydes d'azote requise pour traiter cet écart et l'injection de cet agent réducteur dans la ligne d'échappement.

4. Procédé de dépollution selon la revendication 3, **caractérisé en ce que** la quantité d'un agent réducteur des oxydes d'azote requise pour traiter cet écart est compatible avec les limites physiques et contraintes de durabilité des composants.

5. Procédé de dépollution selon l'une quelconque des revendications précédentes, **caractérisé en ce que** la température extérieure est mesurée de manière continue grâce à un capteur (**9**) de température.

6. Procédé de dépollution selon l'une quelconque des revendications précédentes, **caractérisé en ce que** la détermination de la quantité d'oxydes d'azote réellement produite par le moteur (**2**) se fait par mesure grâce à une sonde (**8**) positionnée en aval du moteur (**2**) et en amont du catalyseur (**7**).

7. Procédé de dépollution selon l'une quelconque des revendications précédentes, **caractérisé en ce que** la détermination de la consigne (**16**) de quantité d'oxydes d'azote dans les gaz d'échappement à ne pas dépasser en sortie de la ligne d'échappement (**3**) se fait à l'aide d'une fonction de transfert dont l'entrée est la température extérieure et la sortie est consigne (**16**) de quantité d'oxydes d'azote dans les gaz d'échappement à ne pas dépasser à la sortie de la ligne d'échappement.

8. Système (**4**) de dépollution, **caractérisé en ce que** celui-ci comprend :
- un réducteur catalytique sélectif ou SCR (**7**),
- un réservoir (**5**) d'un agent réducteur des oxydes d'azote,
- un circuit (**11**) d'injection muni d'une pompe (**13**) et d'un injecteur (**12**) en amont du SCR,
- un calculateur (**10**) comprenant un processeur et un support mémoire dans lequel est implémenté un programme informatique mettant en oeuvre le procédé de dépollution selon l'une quelconque des revendications précédentes.

9. Système (**4**) de dépollution selon la revendication 8, **caractérisé en ce que** l'agent réducteur est de l'ammoniac ou un précurseur liquide de l'ammoniac.

10. Véhicule (**1**) automobile, **caractérisé en ce que** celui-ci comprend un système (**4**) de dépollution selon l'une quelconque des revendications 8 ou 9.

## Patentansprüche

1. Verfahren zur Reinigung der Abgase aus einem Innenverbrennungsmotor (2), eine Abgasleitung (3) umfassend, wobei dieses Verfahren zur Reinigung zumindest teilweise in einem Katalysator (7) angewendet wird, der in der Abgasleitung (3) angeordnet ist, wobei dieses Verfahren die Schritte umfasst:
- Bestimmung einer Menge an Stickoxiden, die tatsächlich vom Motor (2) für einen gegebenen Motor-Betriebspunkt erzeugt wird,
- Bestimmung eines Sollwerts (16) für die Menge an Stickoxiden in den Abgasen am gegebenen Motor-Betriebspunkt, der am Ausgang der Abgasleitung (**3**) nicht zu überschreiten ist,
- Vergleich der Menge an Stickoxiden, die tatsächlich vom Motor (**2**) am gegebenen Motor-Betriebspunkt erzeugt wird, mit diesem Sollwert (**16**) für die Menge an Stickoxiden, die nicht zu überschreiten ist, und wenn die Menge an Stickoxiden, die tatsächlich vom Motor (**2**) erzeugt wird, größer ist, als dieser Sollwert (**16**) für die Menge an Stickoxiden, die nicht zu überschreiten ist, die Behandlung der Stickoxide, solange die tatsächlich erzeugte Menge an Stickoxiden (**2**) größer ist, als der Sollwert (**16**) für die Menge an Stickoxiden, die am Ausgang der Abgasleitung (**3**) nicht zu überschreiten ist,
**dadurch gekennzeichnet, dass** der Sollwert (**16**) für die Menge an Stickoxiden in den Abgasen, die am Ausgang der Abgasleitung (**3**) nicht zu überschreiten ist, je nach Außentemperatur bestimmt wird.

2. Verfahren zur Reinigung nach Anspruch 1, **dadurch gekennzeichnet, dass** der Schritt des Vergleichs die Bestimmung der Abweichung zwischen der Menge an Stickoxiden, die tatsächlich vom Motor (**2**) am gegebenen Motor-Betriebspunkt erzeugt wird, und dem Sollwert (**16**) für die Menge an Stickoxiden umfasst, die nicht zu überschreiten ist.

3. Verfahren zur Reinigung nach Anspruch 2, **dadurch gekennzeichnet, dass** der Schritt der Behandlung der Stickoxide die Berechnung einer Menge eines Reduktionsmittels für die Stickoxide umfasst, die zur Behandlung dieser Abweichung nötig ist, und die Injektion dieses Reduktionsmittels in die Abgasleitung.

4. Verfahren zur Reinigung nach Anspruch 3, **dadurch gekennzeichnet, dass** die Menge eines Reduktionsmittels für die Stickoxide, die zur Behandlung dieser Abweichung nötig ist, mit den physikalischen Grenzen und den Anforderungen an die Lebensdauer der Komponenten kompatibel ist.

5. Verfahren zur Reinigung nach einem der vorstehenden Ansprüche, **dadurch gekennzeichnet, dass** die Außentemperatur ununterbrochen dank eines Temperatursensors (**9**) gemessen wird.

6. Verfahren zur Reinigung nach einem der vorstehenden Ansprüche, **dadurch gekennzeichnet, dass** die die Bestimmung der Menge an Stickoxiden, die tatsächlich vom Motor (**2**) erzeugt wird, durch Messen dank einer Sonde (**8**) erfolgt, die stromabwärts des Motors (**2**) und stromaufwärts des Katalysators (**7**) positioniert ist.

7. Verfahren zur Reinigung nach einem der vorstehenden Ansprüche, **dadurch gekennzeichnet, dass** die Bestimmung des Sollwerts (**16**) für die Menge an Stickoxiden in den Abgasen, die am Ausgang der Abgasleitung (**3**) nicht zu überschreiten ist, anhand einer Übertragungsfunktion erfolgt, deren Eingang die Außentemperatur ist und der Ausgang der Sollwert (**16**) für die Menge an Stickoxiden in den Abgasen ist, die am Ausgang der Abgasleitung nicht zu überschreiten ist.

8. System (**4**) zur Reinigung, **dadurch gekennzeichnet, dass** dieses umfasst:
- eine selektive katalytische Reduktion oder SCR (**7**),
- einen Tank (**5**) mit einem Reduktionsmittel für die Stickoxide,
- einen Kreislauf (**11**) zum Injizieren, der mit einer Pumpe (**13**) und einem Injektor (**12**) stromaufwärts der SCR versehen ist,
- einen Rechner (**10**), einen Prozessor und ein Speichermedium umfassend, in dem ein Informatik-Programm implementiert ist, der das Verfahren zum Reinigen nach einem der vorstehenden Ansprüche umsetzt.

9. System (**4**) zur Reinigung nach Anspruch 8, **dadurch gekennzeichnet, dass** das Reduktionsmittel Ammoniak oder ein flüssiges Vorprodukt von Ammoniak ist.

10. Kraftfahrzeug (**1**), **dadurch gekennzeichnet, dass** dieses ein System (**4**) zur Reinigung nach einem der Ansprüche 8 oder 9 umfasst.

## Claims

1. Process for decontamination of exhaust gas coming from an internal combustion engine (**2**) including an exhaust line (**3**), this decontamination process being at least partially integrated in a catalyser (**7**) disposed within the exhaust line (**3**), this process comprises the following stages:
- determination of the quantity of nitrogen oxide actually produced by the engine (**2**) for a given motor operating point,
- determination of a setting (**16**) of quantity of nitrogen oxide in the exhaust gas at the given motor operating point not to be exceeded on leaving the exhaust line (**3**),
- comparison of the quantity of nitrogen oxide actually produced by the engine (**2**) at the given motor operating point with this setting (**16**) of quantity of nitrogen oxide not to be exceeded, and if the quantity of nitrogen oxide actually produced by the engine (**2**) is greater than the setting (**16**) of quantity of nitrogen oxide not to be exceeded, treatment of the nitrogen oxide, as long as the quantity of nitrogen oxide actually produced (**2**) is greater than the setting (**16**) of quantity of nitrogen oxide not to be exceeded on leaving the exhaust line (**3**),
**characterised in that** the setting (**16**) of quantity of nitrogen oxide in the exhaust gas not to be exceeded on leaving the exhaust line (**3**) is determined as a function of the outside temperature.

2. Process for decontamination according to claim 1, **characterised in that** the comparison stage includes determination of the difference between the quantity of nitrogen oxide actually produced by the engine (**2**) at the given operating point and the setting (**16**) of quantity of nitrogen oxide not to be exceeded.

3. Process for decontamination according to claim 2, **characterised in that** the stage for treating the nitrogen oxide includes calculating a quantity of nitrogen oxide reducing agent required to treat this difference and the injection of this reducing agent into the exhaust line.

4. Process for decontamination according to claim 3, **characterised in that** the quantity of nitrogen oxide reducing agent required to treat this difference is compatible with the physical limits and restrictions of component durability.

5. Process for decontamination according to one of the preceding claims, **characterised in that** the outside temperature is measured in a continuous manner thanks to a temperature sensor (**9**).

6. Process for decontamination according to one of the preceding claims, **characterised in that** determination of the quantity of nitrogen oxide actually produced by the motor (**2**) is done thanks to a sensor (**8**) positioned downstream from the engine (**2**) and upstream from the catalyser (**7**).

7. Process for decontamination according to one of the preceding claims, **characterised in that** determination of the setting (**16**) of quantity of nitrogen oxide in the exhaust gas not to be exceeded on leaving the exhaust line (**3**) is done with the help of a transfer function the input of which is the outside temperature and the output is the setting (**16**) of quantity of nitrogen oxide in the exhaust gas not to be exceeded on leaving the exhaust line.

8. Decontamination system (**4**), **characterised in that** this comprises:
- a selective catalytic reducer or SCR (**7**),
- a reservoir (**5**) for a nitrogen oxide reducing agent,
- an injection circuit (**11**) fitted with a pump (**13**) and an injector (**12**) upstream from the SCR,
- a calculator (**10**) including a processor and a memory card in which is stored a computer program for implementing the decontamination process according to any one of the preceding claims.

9. Decontamination system (**4**) according to claim 8, **characterised in that** the reducing agent is ammonia or a liquid precursor of ammonia.

10. Motor vehicle (**1**), **characterised in that** this includes a decontamination system (**4**) according to any one of the claims 8 or 9.
